# EUROPEAN PATENT APPLICATION

(11) **EP 1 961 929 A1**
(43) Date of publication of application: **27.08.2008**
(21) Application number: 06823004.4
(22) Date of filing: 06.11.2006
(51) Int. Cl.: F01N 3/02, B01D 39/20, B01D 46/42, F01N 3/10

(54) **HONEYCOMB STRUCTURE BODY AND METHOD OF PRODUCING THE SAME**

(30) Priority: 05.12.2005 JP 2005351131; 27.06.2006 JP 2006176460
(71) Applicant: NGK INSULATORS, LTD., Nagoya-shi, Aichi 467-8530 (JP)
(72) Inventor: KATSUYAMA, Kyosuke, Nagoya-shi Aichi 467-8530 (JP); MIYASHITA, Takeya, Nagoya-shi Aichi 467-8530 (JP); KITOH, Kenshin, Nagoya-shi Aichi 467-8530 (JP); MIYAIRI, Yukio, Nagoya-shi Aichi 467-8530 (JP)
(74) Representative: Paget, Hugh Charles Edward
(86) International application number: PCT/JP2006/322090
(87) International publication number: WO 2007/066462

(57) **Abstract**

There is provided a honeycomb structure capable of suitably be used for a filter for trapping particulate matter, such as a diesel particulate filter (DPF) and capable of detecting an accumulation amount of particulate matter easily with high accuracy when the honeycomb structure is used for a filter for trapping particulate matter. The honeycomb structure 1 has a plurality of cells functioning as gas passages and partitioned and formed by the porous partition walls and has two or more electrodes therein.

## Description

### Technical Field

The present invention relates to a honeycomb structure suitably usable for a filter for trapping particulate matter, such as a diesel particulate filter (DPF) and having electrodes and a method for manufacturing the honeycomb structure.

### Background Art

A representative means for purifying gas by trapping particulate matter in the gas is filtration with a filter. Examples of a material and a structure of a filter include a fiber layer, a ceramic form, and a metal form. In particular, as a material and a structure capable of reducing pressure loss, there is well known a wall-flow type one in which an end portion of each of the cells is alternately plugged in such a manner that the end faces of a honeycomb structure having a plurality of cells functioning as gas passages and being partitioned and formed by porous partition walls show a checkerwise pattern.

In such a filter for trapping particulate matter, it is necessary to exchange the filter for a new one or to subject the filter to a regeneration treatment to remove accumulated particulate matter before accumulation of particulate matter reaches the application limit of the filter, since the filter performance is lowered due the progress in clogging of a filter with the accumulation of particulate matter. In order to determine timing of the exchange or the regeneration treatment, detection of an accumulation amount of particulate matter is necessary. Conventionally, the accumulation amount of particulate matter has been detected by detecting a pressure difference in pressure of the exhaust gas between in front end of the filter and at the rear end of filter due to pressure loss of the filter using a differential pressure sensor (see, e.g., Patent Document 1).

However, in a filter for trapping particulate matter, there are many cases that pressure loss of a filter has hysteresis with respect to the accumulation amount of particulate matter, and it is often impossible to unambiguously detect the accumulation amount of particulate matter only from the pressure difference in discharged pressure between in front end of the filter and at the rear end of filter due to pressure loss of the filter. For example, in a wall flow type ceramic filter (DPF) for trapping particulate matter discharged from a diesel engine, when temperature temporarily rises to a level where a catalyst coated inside pores of the filter becomes active after particulate matter is trapped at low temperature, the particulate matter accumulated inside the pores is oxidized and removed, and pressure loss decreases to a large extent due to oxidation and removal of a small amount of particulate matter in pores. Therefore, a relation between the accumulation amount of particulate matter and pressure loss show hysteresis, and there arises a large difference in an amount of particulate matter even with the same pressure loss.

Therefore, in such a filter for trapping particulate matter, it is difficult to estimate the accumulation amount of particulate matter unambiguously, and, at present, when timing of the exchange or the regeneration treatment of filter is determined, the accumulation amount of particulate matter in a filter is estimated with employing the prediction of the generation amount of particulate matter from an engine depending on a driving period of time and driving conditions together with information on pressure loss to determine timing of the exchange or the regeneration treatment of filter from the estimated amount of accumulation.

As another means for detecting the accumulation amount of particulate matter, there has been considered a method where two or more electrodes are arranged in the outer peripheral portion of a filter for trapping particulate matter using a honeycomb structure as described above, and impedance between the electrodes is measured to estimate the accumulation amount of particulate matter from the measured value (see Patent Document 2).
Patent Document 1: JP-A-60-47937
Patent Document 2: W02005/078253

### Disclosure of the Invention

The present invention has been made in view of such conventional circumstances and aims to provide a honeycomb structure capable of suitably be used for a filter for trapping particulate matter, such as a diesel particulate filter (DPF) and capable of detecting an accumulation amount of particulate matter easily with high accuracy when the honeycomb structure is used for a filter for trapping particulate matter.

In order to achieve the above aim, according to the present invention, there is provided the following honeycomb structure and method for manufacturing the honeycomb structure.

[1] A honeycomb structure having a plurality of cells functioning as gas passages and partitioned and formed by the porous partition walls, wherein the structure has two or more electrodes therein.

[2] A honeycomb structure according to the above [1], wherein one end portion of each of the cells is plugged.

[3] A honeycomb structure according to the above [2], wherein one end portion of each of the cells is alternately plugged in such a manner that the end faces of the honeycomb structure show a checkerwise pattern.

[4] A honeycomb structure according to the above [2] or [3], wherein the honeycomb structure is used for a filter for trapping particulate matter and capable of detecting an amount of trapped particulate matter by using the electrodes.

[5] A honeycomb structure according to the above [4], wherein the amount of trapped particulate matter can be detected by measuring electrical properties such as AC impedance, DC resistance, reactance, and capacitance between the electrodes.

[6] A honeycomb structure according to any one of the above [1] to [5], wherein the honeycomb structure is constituted of a material containing, as a main component, one or more kinds of ceramics selected from a group consisting of silicon carbide, cordierite, alumina titanate, sialon, mullite, silicon nitride, zirconium phosphate, zirconia, titania, alumina, and silica or a sintered metal.

[7] A honeycomb structure according to any one of the above [1] to [6], wherein the electrodes are constituted of any of a metal, a conductive oxide, a conductive nitride, and a conductive ceramic.

[8] A honeycomb structure according to any one of the above [1] to [7], wherein at least one of the electrodes is formed by disposing a conductor inside a ceramic body.

[9]. A honeycomb structure according to the above [8], wherein the ceramic body of the electrode is of cordierite.

[10] A honeycomb structure having a plurality of cells functioning as gas passages and partitioned and formed by the porous partition walls and having two or more electrodes on the surface thereof,
wherein at least one of the electrodes is formed by disposing a conductor inside a ceramic body.

[11] A honeycomb structure according to the above [10], wherein an end portion of each of the cells is plugged.

[12] A honeycomb structure according to the above [11], wherein one end portion of each of the cells is alternately plugged in such a manner that the end faces of the honeycomb structure show a checkerwise pattern.

[13] A honeycomb structure according to the above [11] or [12], wherein the honeycomb structure is used for a filter for trapping particulate matter and capable of detecting an amount of trapped particulate matter by using the electrodes:

[14] A honeycomb structure according to the above [13], wherein the amount of trapped particulate matter can be detected by measuring electrical properties such as AC impedance, DC resistance, reactance, and capacitance between the electrodes.

[15] A honeycomb structure according to any one of the above [10] to [14], wherein the honeycomb structure is constituted of a material containing, as a main component, one or more kinds of ceramics selected from a group consisting of silicon carbide, cordierite, alumina titanate, sialon, mullite, silicon nitride, zirconium phosphate, zirconia, titania, alumina, and silica or a sintered metal.

[16] A honeycomb structure according to any one of the above [10] to [15], wherein the ceramic body of the electrode is of cordierite.

[17] A method for manufacturing a honeycomb structure according to the above [1], wherein a honeycomb structure having a cross-sectional shape having a cut-out portion with respect to a cross-sectional shape of a final honeycomb structure is prepared, while an electrode-provided honeycomb structure having a cross-sectional shape corresponding with the cross-sectional shape of the cut-out portion and an electrode disposed on the side face thereof is independently manufactured, and the electrode-provided honeycomb structure is engaged with the honeycomb structure having a cross-sectional shape having a cut-out portion at the cut-out portion to form an integral honeycomb structure.

[18] A method for manufacturing a honeycomb structure according to the above [1], wherein a groove for inserting an electrode therein is formed on a honeycomb structure obtained by extrusion forming and firing, and an electrode is inserted in the groove.

[19] A method for manufacturing a honeycomb structure according to the above [1], wherein a honeycomb structure formed body having a groove for inserting an electrode therein is formed by extrusion forming, the obtained formed body is fired, and then an electrode is inserted in the groove.

[20] A method for manufacturing a honeycomb structure according to the above [1], wherein a honeycomb structure formed body having a groove for inserting an electrode therein is formed by extrusion, an electrode is inserted in the groove, and then the formed body is fired.

[21] A method for manufacturing a honeycomb structure according to the above [1], wherein a honeycomb structure formed body having a groove for inserting an electrode therein and an electrode inserted in the groove are unitarily formed by extrusion forming at the same time, and then the formed body is fired.

A honeycomb structure of the present invention can suitably be used for a filter for trapping particulate matter, such as a diesel particulate filter (DPF) and can detect an accumulation amount of particulate matter easily with high accuracy when the honeycomb structure is used for a filter for trapping particulate matter, which enables to easily determine timing of the exchange or the regeneration treatment of the filter. In addition, a manufacturing method of the present invention enables to manufacture honeycomb structures as described above relatively easily and is suitable for mass production.

### Brief Description of the Drawings

[Fig. 1] Fig. 1 is a schematic plan view showing an example of an embodiment of a honeycomb structure of the present invention.
[Fig. 2] Fig. 2 is a schematic plan view showing an example of arrangement of electrodes of a honeycomb structure of the present invention.
[Fig. 3(a)] Fig. 3(a) is a schematic plan view showing another example of an embodiment of a honeycomb structure of the present invention.
[Fig. 3(b)] Fig. Fig. 3(b) is a schematic cross-sectional view taken along X-X' of Fig. 3(a).
[Fig. 4] Fig. 4 is a schematic perspective view showing an embodiment of a comb-shaped electrode used for a honeycomb structure of the present invention.
[Fig. 5] Fig. 5 is a schematic cross-sectional view showing a state of inserting the electrode of Fig. 4 in a honeycomb structure.
[Fig. 6] Fig. 6 is a schematic front view from a side face side of a honeycomb structure, showing a state of inserting the electrode of Fig. 5 in a honeycomb structure.
[Fig. 7] Fig. 7 is an enlarged view of A portion of Fig. 6 and schematic front view showing an example of using a cylindrical electrode.
[Fig. 8] Fig. 8 is an enlarged view of A portion of Fig. 6 and schematic front view showing an example of using a prismatic electrode.
[Fig. 9] Fig. 9 is a schematic front view showing another embodiment of a comb-shaped electrode used for a honeycomb structure of the present invention.
[Fig. 10] Fig. 10 is a schematic cross-sectional view showing a state of inserting an electrode of Fig. 9 in a honeycomb structure.
[Fig. 11] Fig. 11 is a schematic front view from a side face side of a honeycomb structure, showing a state of inserting an electrode of Fig. 9 in a honeycomb structure.
[Fig. 12] Fig. 12 is an enlarged view of B portion of Fig. 11 and schematic front view showing an example of using a cylindrical electrode.
[Fig. 13] Fig. 13 is an enlarged view of B portion of Fig. 11 and schematic front view showing an example of using a prismatic electrode.
[Fig. 14] Fig. 14 is a schematic front view showing an example of using a flexible linear metal electrode used for a honeycomb structure of the present invention.
[Fig. 15] Fig. 15 is a cross-sectional view taken along C-C' of Fig. 14.
[Fig. 16] Fig. 16 is a schematic front view showing another example of using a flexible linear metal electrode used for a honeycomb structure of the present invention.
[Fig. 17] Fig. 17 is a cross-sectional view taken along D-D' of Fig. 16.
[Fig. 18] Fig. 18 is a schematic cross-sectional view showing a state of fixing an electrode to a honeycomb structure of the present invention.
[Fig. 19] Fig. 19 is another schematic cross-sectional view showing a state of fixing an electrode to a honeycomb structure of the present invention.
[Fig. 20] Fig. 20 is a schematic cross-sectional view of a honeycomb structure housed in a can, showing an example of using an embodiment of an electrode provided with a protrusion used for a honeycomb structure of the present invention.
[Fig. 21] Fig. 21 is a front view from an end face of the honeycomb structure of Fig. 20.
[Fig. 22] Fig. 22 is a plan view of the honeycomb structure of Fig. 20.
[Fig. 23] Fig. 23 is a schematic cross-sectional view of a honeycomb structure housed in a can, showing an example of using another embodiment of an electrode provided with a protrusion used for a honeycomb structure of the present invention.
[Fig. 24] Fig. 24 is a schematic plan view showing a method for manufacturing a honeycomb structure (first manufacturing method) of the present invention.
[Fig. 25] Fig. 25 is a schematic plan view showing a method for manufacturing a honeycomb structure (first manufacturing method) of the present invention.
[Fig. 26] Fig. 26 is a schematic plan view showing a method for manufacturing a honeycomb structure (first manufacturing method) of the present invention.
[Fig. 27] Fig. 27 is a schematic plan view showing a method for manufacturing a honeycomb structure (first manufacturing method) of the present invention.
[Fig. 28] Fig. 28 is a schematic plan view showing a method for manufacturing a honeycomb structure (first manufacturing method) of the present invention.
[Fig. 29]. Fig. 29 is a schematic plan view showing a method for manufacturing a honeycomb structure (second manufacturing method) of the present invention.
[Fig. 30] Fig. 30 is a schematic plan view showing a method for manufacturing a honeycomb structure (second manufacturing method) of the present invention.
[Fig. 31] Fig. 31 is a schematic plan view showing a method for manufacturing a honeycomb structure (second manufacturing method) of the present invention.
[Fig. 32] Fig. 32 is a schematic plan view showing methods for manufacturing a honeycomb structure (third and fourth manufacturing methods) of the present invention.
[Fig. 33] Fig. 33 is a schematic plan view showing methods for manufacturing a honeycomb structure (third and fourth manufacturing methods) of the present invention.
[Fig. 34] Fig. 34 is a schematic plan view showing a method for manufacturing a honeycomb structure (fifth manufacturing method) of the present invention.
[Fig. 35] Fig. 35 is a schematic plan view showing a method for manufacturing a honeycomb structure used in Example.
[Fig. 36] Fig. 36 is a schematic plan view showing a method for manufacturing a honeycomb structure used in Example.
[Fig. 37] Fig. 37 is a graph showing a relation between the mass of accumulated particulate matter and AC impedance in Example.

### Reference Numerals

1: honeycomb structure; 2, 2a, 2b, 2c: electrode; 3: cut-out portion; 5: honeycomb structure with electrode; 7: groove; 10: plugged cell; 14, 14a, 14b: adhesive; 16: can body; 18: mat; 20: wire; 22: protruding portion

### Best Mode for Carrying out the Invention

Typical embodiments of the present invention will hereinbelow be described specifically with referring to drawings. However, the present invention is by no means limited to the following embodiments, and it should be understood that changes, improvements, etc., of a design may suitably be added based on knowledge of a person of ordinary skill within a range of not deviating from the gist of the present invention.

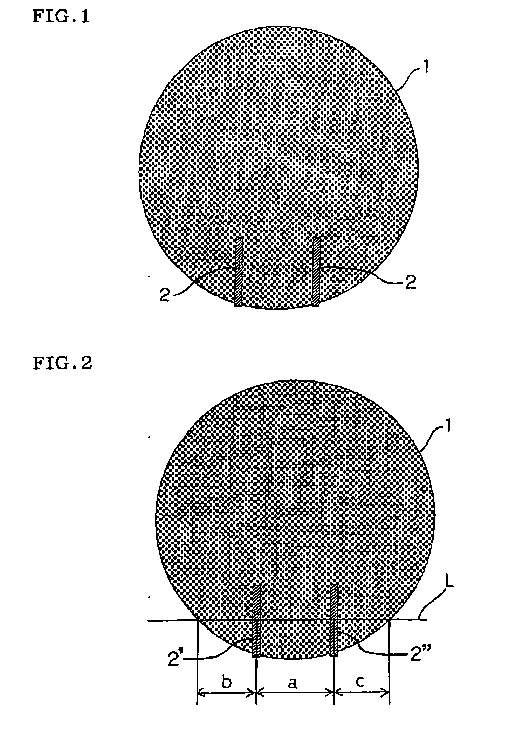

Fig. 1 is a schematic plan view showing an example of an embodiment of a honeycomb structure of the present invention. The honeycomb structure 1 is a honeycomb structure where a plurality of cells functioning as gas passages are partitioned and formed by porous partition walls and has two or more electrodes 2 therein. In the case that the honeycomb structure is used for a filter for trapping particulate matter such as a DPF, it is preferable that an end portion of each of the cells is plugged, and it is particularly preferable that one end portion of the cells is alternately plugged with a plugging member in such a manner that each of the end faces of the honeycomb structure 1 shows checkerwise pattern. By such a structure, exhaust gas flowing into the honeycomb structure 1 is compulsorily passed through porous partition walls between cells, and particulate matter in the exhaust gas is trapped by the partition walls when the exhaust gas passes through the partition walls.

When the honeycomb structure 1 is used for a filter for trapping particulate matter such as a DPF, it is possible to detect the amount of trapped particulate matter by using electrodes 2. Specifically, by measuring electrical properties such as AC impedance, DC resistance, reactance, and capacitance between the electrodes 2, 2, the amount of trapped particulate matter is detected. That is, in the filter for trapping particulate matter, by measuring electrical properties such as AC impedance between the electrodes 2, 2 arranged inside the honeycomb structure 1, changes of capacitance, DC resistance, and the like between the electrodes 2, 2 due to accumulation of particulate matter in the honeycomb structure 1 can be detected. Since the capacitance between the electrodes 2, 2 changes according to the absolute quantity of particulate matter in the honeycomb structure 1, the accumulation amount of particulate matter in the honeycomb structure 1 can unambiguously be estimated from the data of measurement of electrical properties such as AC impedance. Specifically, by graphing out the relation between the mass of the accumulated particulate matter and electrical properties such as AD impedance based on actual measurement values, the accumulation amount of particulate matter at the point of measurement can be estimated only by measuring electrical properties such as AC impedance.

When the electrodes are arranged inside the honeycomb structure, much noise is hardly caused, and the accumulation amount of particulate matter can be estimated with high accuracy. At this time, as shown in Fig. 2, it is preferable that 2b>a and 2c>a when the distance between the electrodes 2' and 2" on a straight line L linking the barycenters of the electrodes 2' and 2" is defined as a, the distance from one outer peripheral face of the honeycomb structure to the electrode 2' is defined as b, and the distance from one outer peripheral face of the honeycomb structure to the electrode 2" is defined as c, and that the two electrodes 2' and 2" are arranged face to face in parallel with each other.

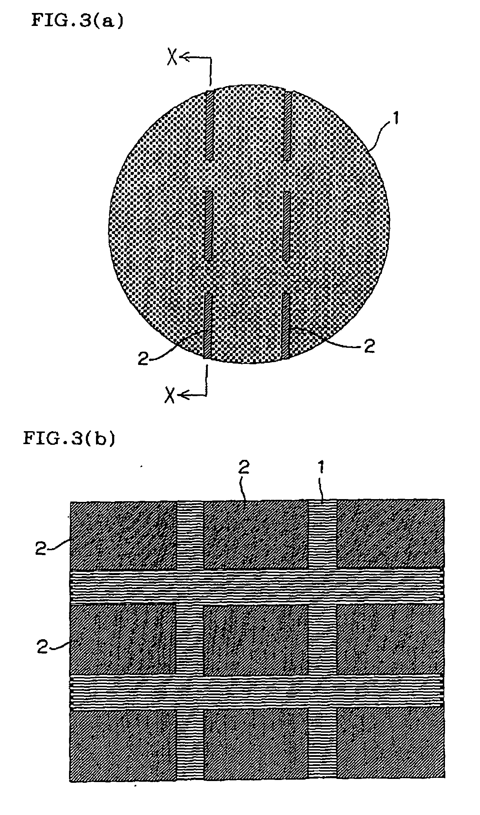

Figs. 3(a) and 3(b) are schematic views showing another example of an embodiment of a honeycomb structure of the present invention; where Fig. 3(a) is a schematic plan view, and Fig. 3 (b) is a schematic cross-sectional view at X-X cross section of Fig. 3 (a). The honeycomb structure 1 is a structure where a plurality of electrodes 2 are embedded in the diametral direction and the longitudinal direction. In the honeycomb structure 1, since the accumulation amount of particulate matter in the vicinity of the electrodes can be estimated by measuring electrical properties such as each AC impedance between adjacent electrodes 2, 2, a distribution of the accumulation amount of particulate matter in the diametral direction and the longitudinal direction of the honeycomb structure can be figured out by comparing the measurement values.

In the present invention, there is no particular limitation on material for the honeycomb structure (except for the electrodes), and a suitable honeycomb structure is constituted of a material containing, as the main component, at least one kind of ceramic selected from the groups consisting of silicon carbide, cordierite, alumina titanate, sialon, mullite, silicon nitride, zirconium phosphate, zirconia, titania, alumina, and silica, or a sintered metal.

In addition, there is no particular limitation on material for the electrodes, and a suitable electrode is constituted of one of metals, sintered bodies of conductive paste, conductive oxides, conductive nitrides, and conductive ceramics.

Incidentally, it is preferable to select each material for the honeycomb structure and the electrodes in such a manner that the difference in thermal expansion coefficient between them becomes 5×10⁻⁶/°C or less. For example, when a honeycomb structure of the present invention is used for a DPF, the honeycomb structure is exposed to a high temperature environment when it is used. Therefore, when the difference in thermal expansion coefficient between the honeycomb structure and the electrodes is too large, there may be caused a problem of damages in honeycomb structure or exfoliation of the electrode due to the thermal expansion difference. However, when the difference in thermal expansion coefficient is 5×10⁻⁶/°C or less, probability of causing such a problem is low.

A plate-shaped metal as the material for the electrodes is advantageous because handling upon embedding is easy and because welding of a wire to a measuring circuit is possible. In addition, a mesh-shaped, lath-shaped, or corrugated metal plate is more advantageous because thermal expansion is reduced.

As a material for the metal plate, there may suitably be used a material hardly deteriorated even at high temperature as in exhaust gas atmosphere, such as stainless steel and nickel.

The metal as a material for the electrodes may have a shape capable of being inserted into cells of the honeycomb structure. Example of the metal having a shape capable of being inserted into cells include a comb-shaped electrode having metal sticks of a predetermined length and a flexible linear metal, for example, an electrode having a wire folded to have a predetermined length. The electrode capable of being inserted into cells is inserted into cells of the honeycomb structure. The electrode can simply be inserted into cells having no plugging from an end face because processing of a slit for embedding of the electrode is not required, and deterioration in strength of the honeycomb structure, which may be caused by slit processing, can be avoided.

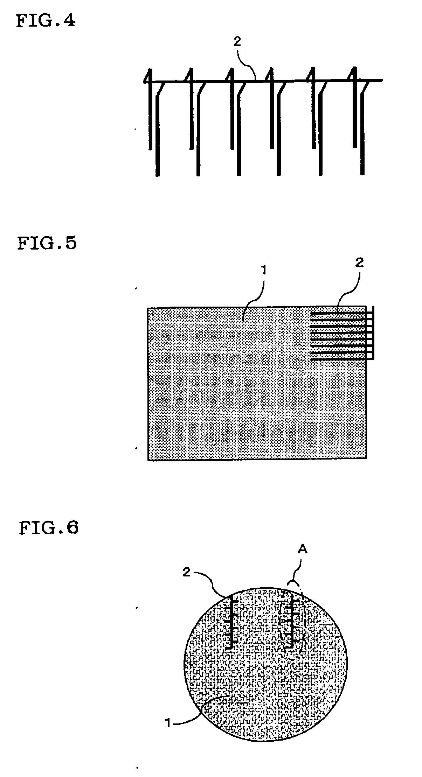

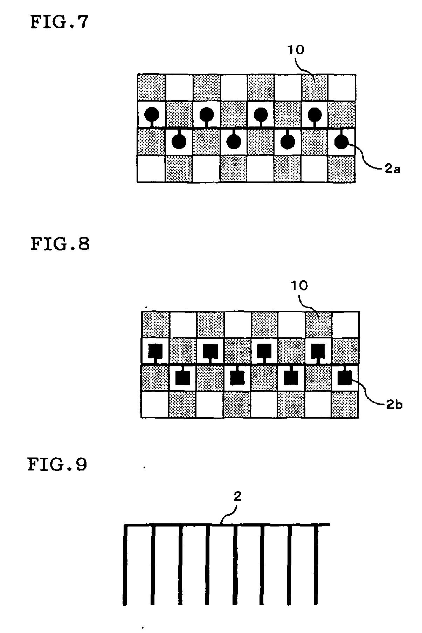

Fig. 4 is a view showing an embodiment of a comb-shaped electrode used for a honeycomb structure of the present invention, and Figs. 5 and 6 are views showing an example of inserting the electrode of Fig. 4 in a honeycomb structure. The comb-shaped electrode 2 of Fig. 4 is inserted into a honeycomb structure 1 as shown in Figs. 5 and 6. Figs. 7 and 8 are enlarged views of A portion surrounded by a dashed-dotted line in Fig. 6. The shape of comb tines of the comb-shaped electrode may be a columnar shape 2a as shown in Fig. 7 or a prismatic shape 2b as shown in Fig. 8. In addition, the electrodes 2a, 2b are inserted in the honeycomb structure with avoiding plugged cells 10.

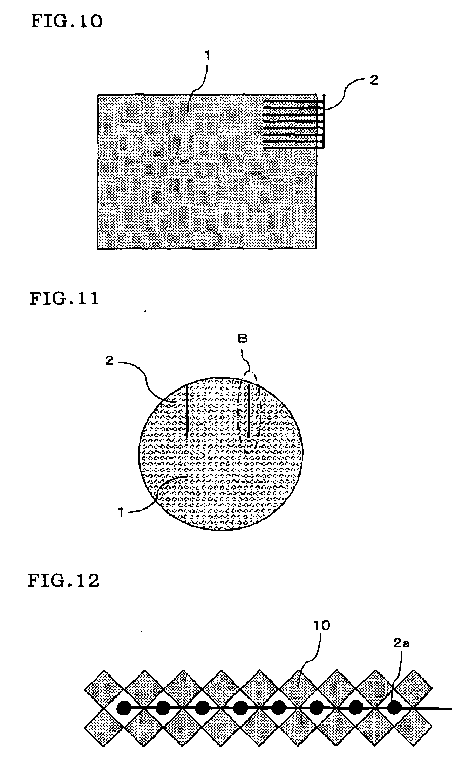

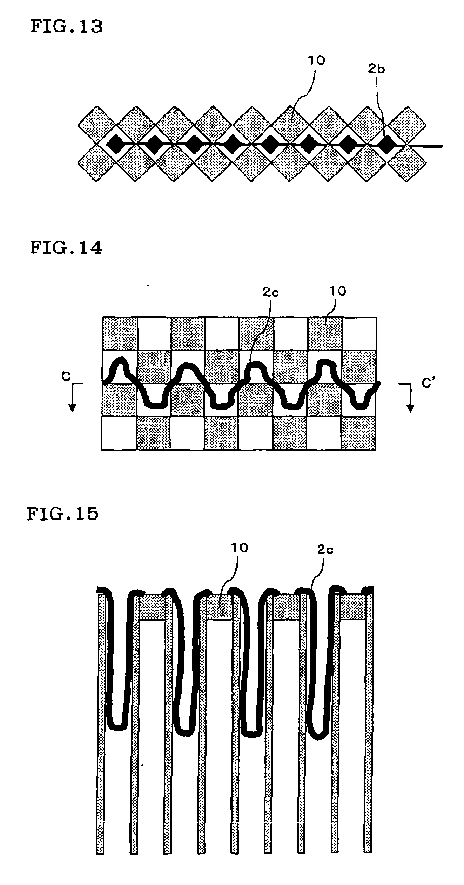

Fig. 9 shows another embodiment of a comb-shaped electrode used for a honeycomb structure of the present invention. Figs. 10 and 11 show an example of inserting the electrode into a honeycomb structure. The comb-shaped electrodes 2 of Fig. 9 are inserted into a honeycomb structure 1 as shown in Figs. 10 and 11. Figs. 12 and 13 are enlarged views of B portion surrounded by a dashed-dotted line in Fig. 11. The shape of comb tines of the comb-shaped electrode may be a columnar shape 2a as shown in Fig. 12 or a prismatic shape 2b as shown in Fig. 13. In addition, the electrodes 2a, 2b are inserted in the honeycomb structure with avoiding plugged cells 10.

Figs. 14 and 15 show an example of inserting an embodiment of an electrode obtained by folding a flexible linear metal to have a predetermined length into a honeycomb structure. The electrode 2c of a flexible linear metal is inserted into cells having no plugging with avoiding plugged cells 10 as shown in Figs. 14 and 15.

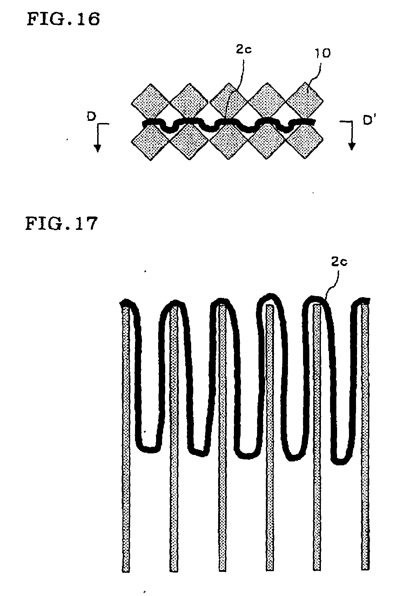

Figs. 16 and 17 show an example of inserting an embodiment of an electrode obtained by folding a flexible linear metal to have a predetermined length into a honeycomb structure. As shown in Figs. 16 and 17, the electrode may be inserted in an oblique direction with respect to cells into cells with no plugging with avoiding plugged cells 10.

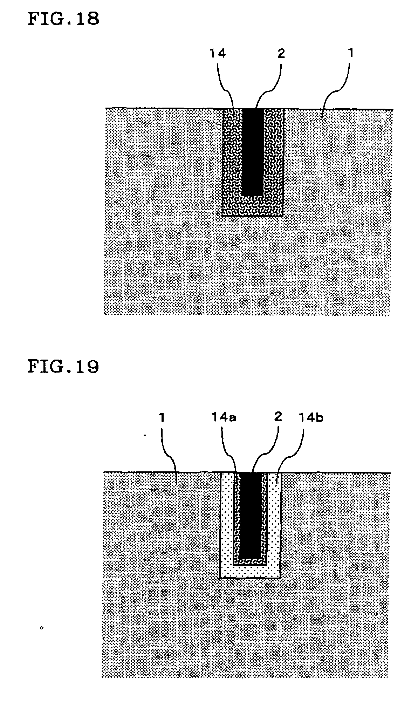

When a gap is generated between the electrode and the honeycomb structure, an adhesive can be filled into the gap between the electrode and the honeycomb structure. The adhesive used for this purpose is preferably an adhesive having a thermal expansion coefficient between that of the electrode and that of the substrate for the honeycomb structure. Fig. 18 shows an example of a state of fixing an electrode to a honeycomb structure. In Fig. 18, an adhesive 14 is filled into the gap between the honeycomb structure 1 and the electrode 2, and the electrode 2 is suitably fixed to the honeycomb structure 1.

When the difference in thermal expansion coefficient between the material for the electrode and the substrate for the honeycomb structure is large, two or more kinds of adhesives may be used. Fig. 19 shows another example showing a state of fixing an electrode to a honeycomb structure. In Fig. 19, an adhesive 14a having a thermal expansion coefficient relatively close to that of the electrode 2 is arranged around the electrode 2, and around the adhesive 14a is arranged an adhesive 14b having a thermal expansion coefficient relatively close to that of the honeycomb structure 1 to fix the electrode 2 to the honeycomb structure 1.

A protruding portion may be arranged on the electrode so that a wire can be taken out from the end portion of an end face or a side face. When the electrode provided with a protruding portion is embedded, it is advantageous because there is no interference upon press-fitting the honeycomb structure in a can body and because manufacturing a terminal at an opening for taking out a wire to the can body or a cone. Further, if the opening is on the outlet side, leakage of soot may hardly be caused. In addition, by mildly fixing the wire with making the connection wire between the terminal at the opening and the electrode long, resistance to vibrations of the electrode or the honeycomb structure increases. The electrode and the connection wire can be fixed by welding.

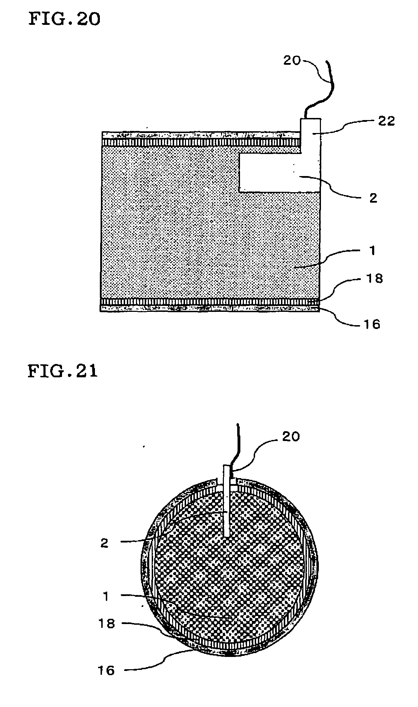

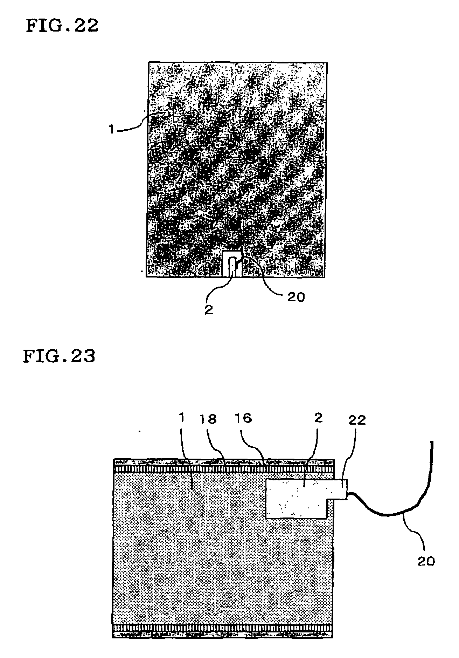

Figs. 20 to 22 show an embodiment of a honeycomb structure of the present invention having an electrode provided with a protruding portion. As shown in Figs. 20 and 21, a honeycomb structure 1 is housed in a can body 16 via a mat 18. A slit is formed in the honeycomb structure 1, and the electrode 2 is inserted into the slit. The electrode 2 is provided with a protruding portion 22 at an end thereof to be connected with a wire 20. As shown in Figs. 21 and 22, the mat 18 and the can body 16 are provided with a cut in a position corresponding with the position of the protruding portion 22 of the electrode 2. The tip portion of the protruding portion 22 is exposed to the outside of the can body 16 from the cut.

Fig. 23 shows another embodiment of a honeycomb structure of the present invention having an electrode provided with a protruding portion. As shown in Fig. 23, a honeycomb structure 1 is housed in a can body 16 via a mat 18. A slit is formed in the honeycomb structure 1, and the electrode 2 is inserted into the slit. The electrode 2 is provided with a protruding portion 22 at an end thereof to be connected with a wire 20.

In addition, in the present invention, at least one electrode may be constituted by disposing a conductor inside a ceramic body. By covering a conductor with a ceramic body as described above, the conductor is not brought into direct contact with exhaust gas, and corrosion and deterioration of the conductor can effectively be inhibited.

In addition, in the present invention, all the electrodes each may be constituted of a ceramic body and a conductor disposed inside the ceramic body.

Examples of the main component of the ceramic body includes a composite material of oxides, nitrides, carbides, and borides, such as silicon nitride, aluminum nitride, and dense cordierite. Specifically, it is preferable that the main component of the ceramic body is at least one compound selected from the group consisting of silicon nitride, aluminum nitride, dense cordierite, aluminum oxide-based composites, silicon carbide-based composites, and mullite-based composites. In particular, silicon carbide-based composites containing BN (boron nitride) particles, which can raise electric resistance of silicon carbide having high thermal conductivity, is suitable as a material for the electrode functioning as a dielectric body. In addition, mullite-based composites containing silicon carbide particles dispersed in mullite, which has low thermal conductivity and low thermal expansion, in order to raise thermal conductivity is also suitable as the main component. Since the difference in thermal expansion between both the materials is small, residual stress generating inside is small. Though both the materials are hardly sintered, firing under pressure is easily applicable because the shape of the electrode is simply a flat plate. Incidentally, in the present embodiment, the main component means a component sharing 60% by mass or more of the whole components.

The electrode may have a flat plate shape or a cylindrical shape. In the case of a flat plate-shaped electrode, the electrode is preferably formed by forming a ceramic body constituting the electrode by tape forming, extrusion forming, press forming, injection forming, casting forming, or the like.

The conductor constituting the electrode preferably contains, as the main component, a metal having excellent conductivity. Suitable examples of the metal as the main component include at least one selected from the group consisting of tungsten, molybdenum, manganese, chrome, titanium, zirconium, nickel, iron, silver, copper, platinum, and palladium. Incidentally, in the present embodiment, the main component means a component sharing 60% by mass or more of the whole components. Incidentally, when the conductor contains two or more kinds of metals described above, the total of the metals shares 60% by mass or more of the whole components. The conductor has a thickness of preferably 0.01 to 0.1 mm, more preferably 0.01 to 0.03 mm because of minimization of the electrode, reduction in resistance of a target fluid which is passed through between the electrodes when exhaust gas or the like is treated, and the like.

In the case that the electrode has a flat plate-shape and further that a conductor is disposed inside a ceramic body, it is preferable that a tape-shaped ceramic formed body (green tape) is used as a ceramic body and that the aforementioned conductor is disposed by coating on the tape-shaped ceramic formed body. Examples of the coating method includes screen printing, calendar roll, spraying, electrostatic coating, dipping, knife coater, chemical vapor deposition, and physical vapor deposition. According to such a method, a thin conductor having excellent flatness and smoothness of a surface after coating can easily be formed.

When a conductor is coated on a tape-shaped ceramic formed body, it is preferable to prepare conductor paste by mixing a powder of the metal described above as the main component of the conductor, an organic binder, and a solvent such as terpineol to coat the mixture on the tape-shaped ceramic formed body by the aforementioned method. In addition, an additive may be added to the aforementioned conductor paste as necessary in order to improve adhesion to the tape-shaped ceramic formed body and sinterability.

In addition, there is no limitation on thickness of a tape-shaped ceramic formed body when the ceramic body is formed of a tape-shaped ceramic formed body, and the thickness is preferably 0.1 to 3 mm. When the tape-shaped ceramic formed body has a thickness of below 0.1 mm, securement of electric insulation between electrodes may be impossible. When the tape-shaped ceramic formed body has a thickness of above 3 mm, space saving may be hindered.

It is preferable to form the honeycomb structure and the ceramic body of the electrode by using the same main component. In this case, the honeycomb structure and the electrode have good adhesion to each other when a honeycomb structure with electrodes is manufactured. In addition, though a honeycomb structure of the present invention is exposed to high temperature upon use, damages due to heat, exfoliation of an electrode, and the like can be reduced because there is little difference in thermal expansion between them.

It is possible to constitute both the honeycomb structure and the electrode by using cordierite as the main component.

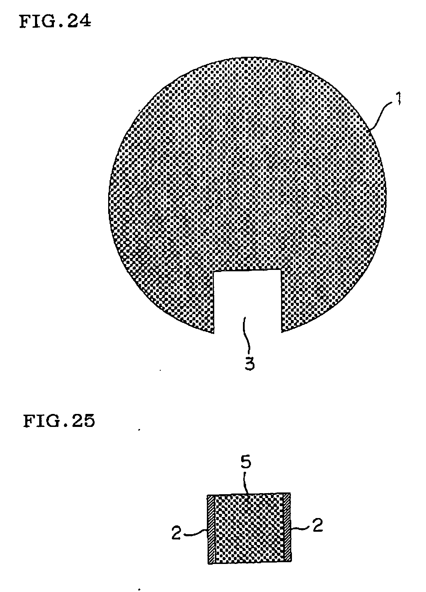

Next, examples of a method for manufacturing a honeycomb structure of the present invention will be described. In the first manufacturing method, in the first place, a honeycomb structure having a cross-sectional shape having a cut-out portion with respect to a cross-sectional shape of a final honeycomb structure is prepared. For example, Fig. 24 is an example of manufacturing a honeycomb structure 1 having a cross-sectional shape having a cut-out portion in a portion in the vicinity of the outer periphery in the case that the cross-sectional shape of the final honeycomb structure is a circle. Such a honeycomb structure 1 can be manufactured by an ordinary extrusion forming method. Incidentally, in the case that a honeycomb structure obtained by the present manufacturing method is used for a filter for trapping particulate matter such as a DPF, it is preferable that one end portion of each cell is alternately plugged with a plugging member as shown in Fig. 24 after forming in such a manner that an end face of the structure shows a checkerwise pattern.

While such a honeycomb structure 1 is formed, as shown in Fig. 25, an electrode-provided honeycomb structure 5 having a cross-sectional shape corresponding with the cross-sectional shape at the cut-out portion 3 of the honeycomb structure 1 and having the electrodes 2 on the side surface portion is independently manufactured. Such an electrode-provided honeycomb structure 5 can be manufactured by fixing a plate-shaped electrode 2 on a side surface of a formed body formed by an ordinary extrusion forming method. Incidentally, in the case that the electrode-provided honeycomb structure 5 is formed for the purpose of being used for a filter for trapping particulate matter such as a DPF, it is preferable that one end portion of each of the cells is alternately plugged with a plugging member as in the above honeycomb structure 1.

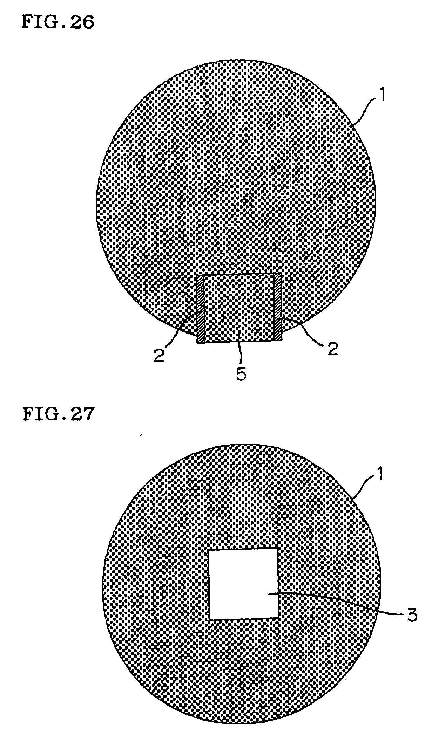

Next, as shown in Fig. 26, the electrode-provided honeycomb structure 5 is engaged with the cut-out portion 3 of the honeycomb structure 1 manufactured as described above to integrate a honeycomb structure of the present invention. It is preferable that the electrode-provided honeycomb structure 5 is engaged with the honeycomb structure 1 having the cut-out portion 3 when both are formed bodies, and, in that case, both of them can unitarily be joined by firing after the engagement.

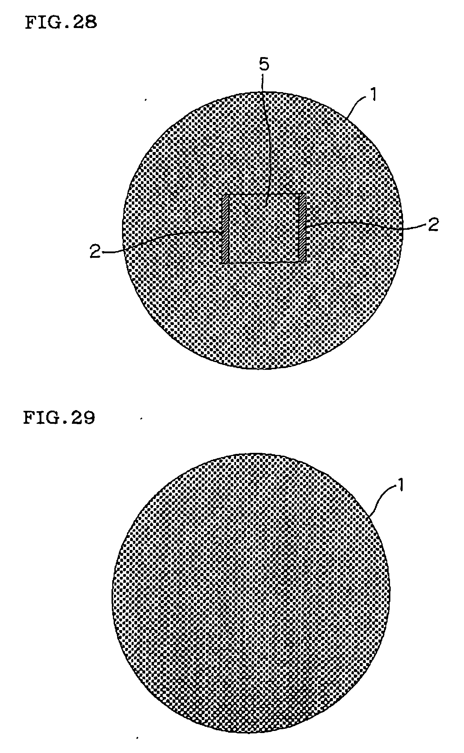

Incidentally, the cut-out portion where the electrode-provided honeycomb structure is engaged of the honeycomb structure is not limited to the vicinity of the outer periphery as the example in Fig. 24, and the cut-out portion may be formed in an arbitrary portion for arranging the electrode. For example, Fig. 27 is an example of a honeycomb structure 1 having a cut-out portion in the central portion of a cross-section. In this case, as shown in Fig. 28, the electrode-provided honeycomb structure 5 is engaged with the cut-out portion 3 of the honeycomb structure 1 to obtain an integral honeycomb structure of the present invention.

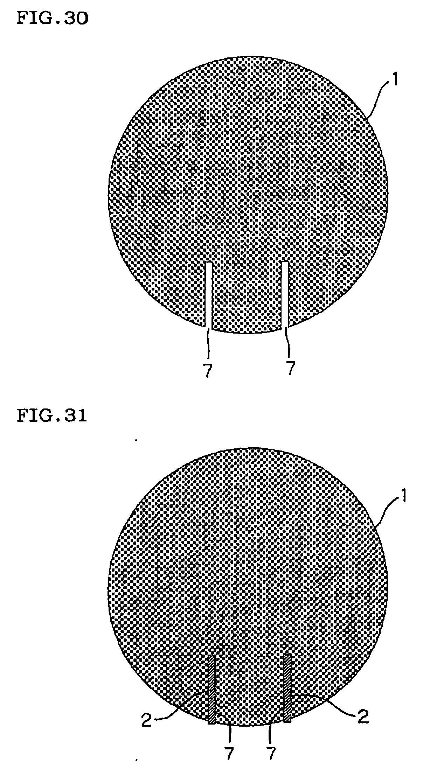

In the second manufacturing method, in the first place, grooves 7 for inserting electrodes therein as in Fig. 30 is formed in a honeycombs structure 1 obtained by forming by an extrusion forming method and firing. Incidentally, in the case that a honeycomb structure obtained by the present manufacturing method is used for a filter for trapping particulate matters such as a DPF, it is preferable to alternately plug one end portion of each of the cells as shown in Fig. 29 after forming in such a manner that an end face of the structure shows a checkerwise pattern. The groove 7 can be formed by machining according to the size of the electrode to be inserted into the groove using a machining apparatus such as a band saw. At this time, in order to inhibit particulate matter from leaking in the case that the honeycomb structure is used for a filter for trapping particulate matter, it is preferable to form the groove 7 in parallel with partition walls along the partition walls. Next, as shown in Fig. 31, the electrode 2 is inserted into the groove 7 of the honeycomb structure 1 having the groove 7 formed therein. Further, as necessary, a portion where the electrode is not inserted of the groove 7 is plugged in order to inhibit leakage of particulate matter to obtain a honeycomb structure of the present invention.

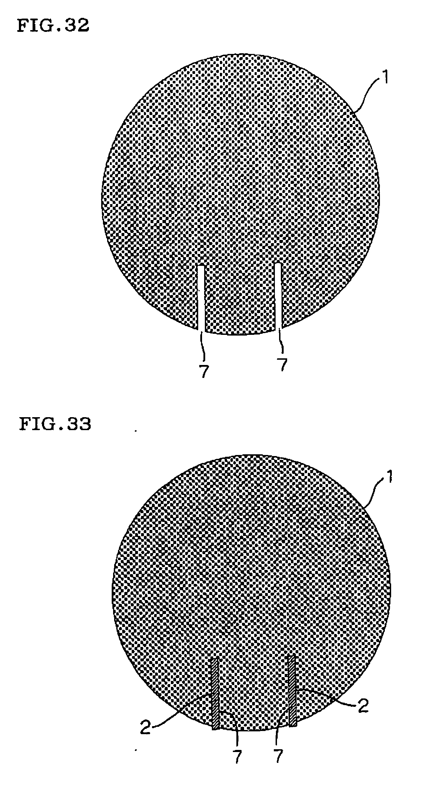

In the third and fourth methods, in the first place, as shown in Fig. 32, a honeycomb structure having a groove 7 for inserting the electrode is formed by an extrusion forming method. That is, the groove for inserting the electrode is not machined later as in the second manufacturing method, but a honeycomb structure 1 having a groove is formed by extrusion forming from the beginning using a extrusion-forming die having a portion corresponding with the shape of the groove 7. Incidentally, in the case that a honeycomb structure obtained by the present manufacturing method is used for a filter for trapping particulate matter such as a DPF, it is preferable that one end portion of each of the cells is alternately plugged with a plugging member after forming in such a manner that an end portion of the structure shows a checkerwise pattern as in Fig. 32.

Next, in the third manufacturing method, after the formed body is fired, the electrode 2 is inserted into the groove 7 of the honeycomb structure 1 as shown in Fig. 33. Further, as necessary, a portion where the electrode is not inserted of the groove 7 is plugged in order to inhibit leakage of particulate matter in the case that the honeycomb structure is used for a filter for trapping particulate matter to obtain a honeycomb structure of the present invention. In addition, in the fourth manufacturing method, before the formed body is fired, the electrode 2 is inserted into the groove 7 of the honeycomb structure 1 as shown in Fig. 33. Further, as necessary, a portion where the electrode is not inserted of the groove 7 is plugged in order to inhibit leakage of particulate matter in the case that the honeycomb structure is used for a filter for trapping particulate matter, followed by firing the formed body, to obtain a honeycomb structure of the present invention.

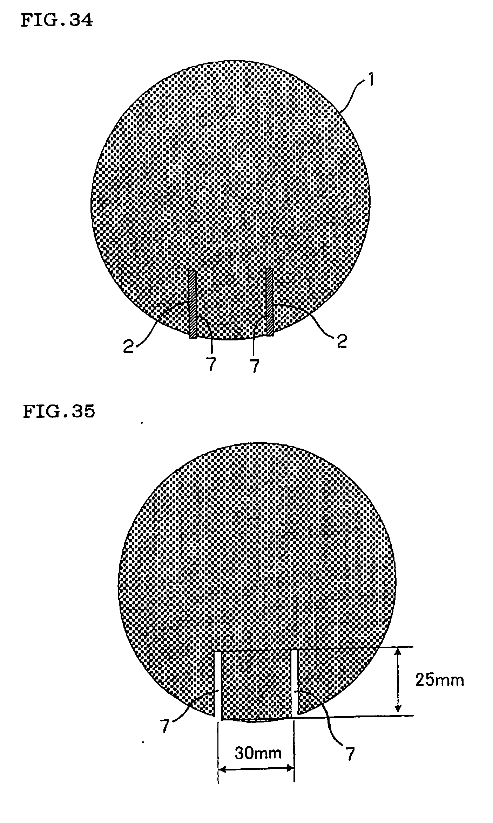

In the fifth manufacturing method, in the first place, as shown in Fig. 34, a honeycomb structure having the groove 7 for inserting the electrode 2 therein and the electrode 2 to be disposed in the groove 7 are unitarily formed at once by an extrusion forming method. That is, an electrode-forming material is sent in the portion corresponding with the inside of the groove 7 of the extrusion-forming die, and a honeycomb structure-forming material is sent in the other portion. Thus, a formed body in a state that the electrode 2 is disposed in the groove from the beginning is formed by an extrusion forming method. Incidentally, in the case that a honeycomb structure obtained in the present manufacturing method is used for a filter for trapping particulate matter such as a DPF, it is preferable that one end portion of each of the cells is alternately plugged with a plugging member after forming in such a manner that an end portion of the structure shows a checkerwise pattern as in Fig. 34. Next, by firing the formed body, a honeycomb structure of the present invention can be obtained.

These first to fifth manufacturing methods enable to manufacture a honeycomb structure of the present invention relatively easily and are suitable for mass production.

### Example

The present invention will hereinbelow be described in more detail on the basis of Examples. However, the present invention is by no means limited to these Examples.

### (Example)

Talc (mean particle diameter: 20µm, powder having particle diameter of 75µm or more: 4 mass%), molten silica (mean particle diameter: 35µm, powder having particle diameter of 75µm or more: 0.5 mass%), and aluminum hydroxide (mean particle diameter: 2µm, powder having particle diameter of 75µm or more: 0 mass%) were mixed together at a proportion of 37 mass% of talc, 19 mass% of molten silica, and 44 mass% of aluminum hydroxide to prepare a cordierite-forming material.

Next, to 100 parts by mass of the cordierite-forming material were added 20 parts by mass of graphite, 7 parts by mass of polyethylene telephthalate, 7 parts by mass of poly(methyl methacrylate), 4 parts by mass of hydroxypropylmethyl cellulose, 0.5 parts by mass of potash soap laurate, and 30 parts by mass of water, and they were mixed to give plasticity to the mixture. The raw material having plasticity was formed to obtain clay of a cylindrical shape by a vacuum kneader, and the clay was formed into a honeycomb shape by an extrusion forming machine.

The formed body obtained was bone-dried by hot air drying after dielectric drying, and then an end portion of each of the cells was alternately plugged in such a manner that both the end faces of the structure show a checkerwise pattern. As the material for plugging, slurry of cordierite-forming raw material having the same composition was used, and the material was filled in an end portion of each of the cells to be plugged to form plugging members.

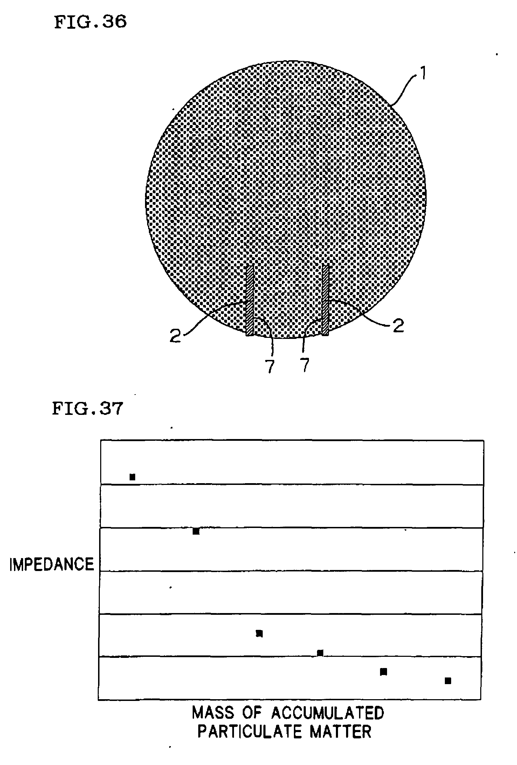

After the structure was fired at 1420°C for four hours, two grooves 7 having a length of 25 mm at an interval of 30 mm as in Fig. 35 by machining. Then, as in Fig. 36, a platinum electrode 2 was inserted into each of the grooves 7 to obtain a honeycomb structure 1 (dimensions: diameter of 144 mm x length of 152 mm, partition wall thickness of 300µm, 300 cells/ inch²) having the electrodes.

Into the honeycomb structure 1 was sent diesel engine exhaust gas containing particulate matter, and, with allowing the particulate matter to accumulate inside the honeycomb structure, AC impedance between two electrodes 2, 2 was measured. The relation between mass of the accumulated particulate matter and AC impedance was as shown in Fig. 37, and it was confirmed that the accumulation amount of accumulated particulate matter can be estimated from the value of AC impedance.

### Industrial Applicability

The present invention can suitably be used as a honeycomb structure usable for a filter for trapping particulate matter such as a DPF and a method for manufacturing the honeycomb structure.

## Claims

1. A honeycomb structure having a plurality of cells functioning as gas passages and partitioned and formed by the porous partition walls, wherein the structure has two or more electrodes therein.

2. A honeycomb structure according to Claim 1, wherein one end portion of each of the cells is plugged.

3. A honeycomb structure according to Claim 2, wherein one end portion of each of the cells is alternately plugged in such a manner that the end faces of the honeycomb structure show a checkerwise pattern.

4. A honeycomb structure according to Claim 2 or 3, wherein the honeycomb structure is used for a filter for trapping particulate matter and capable of detecting an amount of trapped particulate matter by using the electrodes.

5. A honeycomb structure according to Claim 4, wherein the amount of trapped particulate matter can be detected by measuring electrical properties such as AC impedance, DC resistance, reactance, and capacitance between the electrodes.

6. A honeycomb structure according to any one of Claims 1 to 5, wherein the honeycomb structure is constituted of a material containing, as a main component, one or more kinds of ceramics selected from a group consisting of silicon carbide, cordierite, alumina titanate, sialon, mullite, silicon nitride, zirconium phosphate, zirconia, titania, alumina, and silica or a sintered metal.

7. A honeycomb structure according to any one of Claims 1 to 6, wherein the electrodes are constituted of any of a metal, a conductive oxide, a conductive nitride, and a conductive ceramic.

8. A honeycomb structure according to any one of Claims 1 to 7, wherein at least one of the electrodes is formed by disposing a conductor inside a ceramic body.

9. A honeycomb structure according to Claim 8, wherein the ceramic body of the electrode is of cordierite.

10. A honeycomb structure having a plurality of cells functioning as gas passages and partitioned and formed by the porous partition walls and having two or more electrodes on the surface thereof,
wherein at least one of the electrodes is formed by disposing a conductor inside a ceramic body.

11. A honeycomb structure according to Claim 10, wherein an end portion of each of the cells is plugged.

12. A honeycomb structure according to Claim 11, wherein one end portion of each of the cells is alternately plugged in such a manner that the end faces of the honeycomb structure show a checkerwise pattern.

13. A honeycomb structure according to Claim 11 or 12, wherein the honeycomb structure is used for a filter for trapping particulate matter and capable of detecting an amount of trapped particulate matter by using the electrodes.

14. A honeycomb structure according to Claim 13, wherein the amount of trapped particulate matter can be detected by measuring electrical properties such as AC impedance, DC resistance, reactance, and capacitance between the electrodes.

15. A honeycomb structure according to any one of Claims 10 to 14, wherein the honeycomb structure is constituted of a material containing, as a main component, one or more kinds of ceramics selected from a group consisting of silicon carbide, cordierite, alumina titanate, sialon, mullite, silicon nitride, zirconium phosphate, zirconia, titania, alumina, and silica or a sintered metal.

16. A honeycomb structure according to any one of Claims 10 to 15, wherein the ceramic body of the electrode is of cordierite.

17. A method for manufacturing a honeycomb structure according to Claim 1, wherein a honeycomb structure having a cross-sectional shape having a cut-out portion with respect to a cross-sectional shape of a final honeycomb structure is prepared, while an electrode-provided honeycomb structure having a cross-sectional shape corresponding with the cross-sectional shape of the cut-out portion and an electrode disposed on the side face thereof is independently manufactured, and the electrode-provided honeycomb structure is engaged with the honeycomb structure having a cross-sectional shape having a cut-out portion at the cut-out portion to form an integral honeycomb structure.

18. A method for manufacturing a honeycomb structure according to Claim 1, wherein a groove for inserting an electrode therein is formed on a honeycomb structure obtained by extrusion forming and firing, and an electrode is inserted in the groove.

19. A method for manufacturing a honeycomb structure according to Claim 1, wherein a honeycomb structure formed body having a groove for inserting an electrode therein is formed by extrusion forming, the obtained formed body is fired, and then an electrode is inserted in the groove.

20. A method for manufacturing a honeycomb structure according to Claim 1, wherein a honeycomb structure formed body having a groove for inserting an electrode therein is formed by extrusion, an electrode is inserted in the groove, and then the formed body is fired.

21. A method for manufacturing a honeycomb structure according to Claim 1, wherein a honeycomb structure formed body having a groove for inserting an electrode therein and an electrode inserted in the groove are unitarily formed by extrusion forming at the same time, and then the formed body is fired.
